# EUROPEAN PATENT SPECIFICATION

(11) **EP 3 188 071 B1**
(45) Date of publication and mention of the grant of the patent: **13.10.2021**
(21) Application number: 15879631.8
(22) Date of filing: 05.08.2015
(51) Int. Cl.: G06F 21/62, G06F 21/60

(54) **APPLICATION ACCESSING CONTROL METHOD AND DEVICE**
ANWENDUNGSZUGRIFFSTEUERUNGSVERFAHREN UND -VORRICHTUNG
PROCÉDÉ ET DISPOSITIF DE COMMANDE D'ACCÈS À UNE APPLICATION

(30) Priority: 27.01.2015 CN 201510041216
(43) Date of publication of application: 05.07.2017
(73) Proprietor: Huawei Technologies Co., Ltd., Longgang District Shenzhen, Guangdong 518129 (CN)
(72) Inventor: LI, Zhi, Shenzhen Guangdong 518129 (CN); TAO, Jing, Xi'an Shaanxi 710049 (CN)
(74) Representative: Körber, Martin Hans
(86) International application number: PCT/CN2015/086136
(87) International publication number: WO 2016/119432

(56) References cited:
- EP-A1- 2 164 022
- CN-A- 103 067 392
- CN-A- 103 544 447
- CN-A- 104 040 550
- US-A1- 2002 169 957
- US-A1- 2008 134 286
- US-A1- 2012 214 442
- US-A1- 2013 326 638
- None

## Description

### TECHNICAL FIELD

The present invention relates to the field of terminals, and in particular, to an application access control method and apparatus in the field of terminals.

### BACKGROUND

In recent years, mobile phones based on an Android operating system occupy an increasingly large market share on the market of smart devices, but malicious software targeted at the Android operating system emerges one after another. In the Android operating system, sensitivity levels of different application data are usually different, for example, application data such as a short message service message or a contact involves user privacy and therefore has a relatively high sensitivity level, while ordinary application data has a relatively low sensitivity level. Therefore, in the present Android operating system, an effective application access control solution is needed.

At present, a relatively mature access control solution that has relatively wide application is a control solution provided by a security enhanced Android SEAndroid) system. SEAndroid is developed based on a security enhanced Linux (Security Enhanced Linux, "SELinux" for short) system, and SELinux is extended and tailored accordingly to adapt to a security requirement of the Android operating system. For SEAndroid, compilation of an access control strategy between applications needs to involve many operation details of the entire system, and a language of the strategy is very complex and highly technical. Therefore, for a common user, it is difficult to compile an access control strategy between applications, and therefore, a terminal is under great security threat.

EP 2 164 022 A1 describes a method for assigning access authorisation to a computer-based object in an automation system, a computer program and an automation system.

### SUMMARY

In view of this, embodiments of the present invention provide an application access control method and apparatus, to resolve a problem of how to easily and conveniently formulate an access control strategy to improve security of a terminal. This problem is solved by the subject matter of the independent claims. Further implementation forms are provided in the dependent claims.

According to a first aspect, an application access control method is provided, where the method is executed by a mobile terminal and includes: acquiring a graphic input by a user; generating an access strategy graphic according to the graphic, where the access strategy graphic indicates an access rule of whether at least two applications are allowed to access each other; converting the access strategy graphic into an access control strategy that can be identified by a system, where the access control strategy is used to indicate whether applications are allowed to access each other; and controlling access between the at least two applications according to the access control strategy.

With reference to the first aspect, in a first possible implementation manner of the first aspect, the acquiring a graphic input by a user includes: presenting a first interface to the user, where the first interface includes a strategy editing area and a first graphic area, the strategy editing area is used by the user to edit the access strategy graphic, and the first graphic area is used to present to the user various graphics used for indicating the access strategy graphic; and acquiring, by detecting a first graphic dragged by the user from the first graphic area to the strategy editing area, the first graphic input by the user.

With reference to the first possible implementation manner of the first aspect, in a second possible implementation manner of the first aspect, the first graphic includes an application graphic, an inter-application communications connection graphic, and an inter-application access rule graphic, where the application graphic is used to indicate an application, the inter-application communications connection graphic is used to indicate that there is a communications connection between applications, and the inter-application access rule graphic is used to indicate whether applications are allowed to access each other.

With reference to the first or second possible implementation manner of the first aspect, in a third possible implementation manner of the first aspect, the first graphic includes a domain graphic, an inter-domain communications connection graphic, and an inter-domain access rule graphic; or the first graphic includes an application graphic, a domain graphic, an inter-domain communications connection graphic, and an inter-domain access rule graphic, where the application graphic is used to indicate an application, the domain graphic is used to indicate an application domain formed by one or more applications whose attributes are the same, the inter-domain communications connection graphic is used to indicate that there is a communications connection between application domains, and the inter-domain access rule graphic indicates whether application domains are allowed to access each other.

With reference to the third possible implementation manner of the first aspect, in a fourth possible implementation manner of the first aspect, the acquiring a graphic input by a user further includes: presenting a second interface to the user, where the second interface includes a belonging relationship editing area and a second graphic area, the belonging relationship editing area is used by the user to edit a belonging relationship between an application and a domain, and the second graphic area is used to present to the user various graphics used for indicating the belonging relationship; and acquiring, by detecting a second graphic dragged by the user from the second graphic area to the belonging relationship editing area, the second graphic input by the user.

With reference to the fourth possible implementation manner of the first aspect, in a fifth possible implementation manner of the first aspect, the second graphic includes an application graphic, the domain graphic, and a belonging connection graphic, where the application graphic is used to indicate an application, and the belonging connection graphic is used to indicate that there is a belonging relationship between an application and an application domain.

With reference to any possible implementation manner of the first to fifth possible implementation manners of the first aspect, in a sixth possible implementation manner of the first aspect, the method further includes: when the graphic input by the user does not conform to a generating rule of the access strategy graphic, prompting the user with an input error.

With reference to the first aspect or any possible implementation manner of the first to sixth possible implementation manners of the first aspect, in a seventh possible implementation manner of the first aspect, the converting the access strategy graphic into an access control strategy that can be identified by a system includes: acquiring the access rule by parsing the access strategy graphic; determining a security enhanced Android system strategy and/or an intent isolation strategy according to the access rule; and compiling the security enhanced Android system strategy and/or the intent isolation strategy into the access control strategy that can be identified by the system, where the access control strategy includes the security enhanced Android system strategy and/or the intent isolation strategy.

With reference to the first aspect or any possible implementation manner of the first to seventh possible implementation manners of the first aspect, in an eighth possible implementation manner of the first aspect, the access rule indicates whether the at least two applications are allowed to access each other in at least one communication manner of inter-process communication IPC, network communication, file system communication, and intent communication.

According to a second aspect, an application access control apparatus is provided, where the apparatus is a mobile terminal and includes a processor, a memory, and a bus system, the processor and the memory are connected to each other by using the bus system, the memory is configured to store an instruction, and the processor is configured to execute the instruction stored in the memory, where the processor is configured to: acquire a graphic input by a user; generate an access strategy graphic according to the graphic, where the access strategy graphic indicates an access rule of whether at least two applications are allowed to access each other; convert the access strategy graphic into an access control strategy that can be identified by a system, where the access control strategy is used to indicate whether applications are allowed to access each other; and control access between the at least two applications according to the access control strategy.

With reference to the second aspect, in a first possible implementation manner of the second aspect, the apparatus further includes: a display screen, configured to present a first interface to the user, where the first interface includes a strategy editing area and a first graphic area, the strategy editing area is used by the user to edit the access strategy graphic, and the first graphic area is used to present to the user various graphics used for indicating the access strategy graphic, where the acquiring, by the processor, a graphic input by a user specifically includes: acquiring, by detecting a first graphic dragged by the user from the first graphic area to the strategy editing area, the first graphic input by the user.

With reference to the first possible implementation manner of the second aspect, in a second possible implementation manner of the second aspect, the first graphic acquired by the processor includes an application graphic, an inter-application communications connection graphic, and an inter-application access rule graphic, where the application graphic is used to indicate an application, the inter-application communications connection graphic is used to indicate that there is a communications connection between applications, and the inter-application access rule graphic is used to indicate whether applications are allowed to access each other.

With reference to the first or second possible implementation manner of the second aspect, in a third possible implementation manner of the second aspect, the first graphic acquired by the processor includes a domain graphic, an inter-domain communications connection graphic, and an inter-domain access rule graphic; or the first graphic acquired by the processor includes an application graphic, a domain graphic, an inter-domain communications connection graphic, and an inter-domain access rule graphic, where the application graphic is used to indicate an application, the domain graphic is used to indicate an application domain formed by one or more applications whose attributes are the same, the inter-domain communications connection graphic is used to indicate that there is a communications connection between application domains, and the inter-domain access rule graphic indicates whether application domains are allowed to access each other.

With reference to the third possible implementation manner of the second aspect, in a fourth possible implementation manner of the second aspect, the display screen is further configured to: present a second interface to the user, where the second interface includes a belonging relationship editing area and a second graphic area, the belonging relationship editing area is used by the user to edit a belonging relationship between an application and a domain, and the second graphic area is used to present to the user various graphics used for indicating the belonging relationship, where the acquiring, by the processor, a graphic input by a user specifically further includes: acquiring, by detecting a second graphic dragged by the user from the second graphic area to the belonging relationship editing area, the second graphic input by the user.

With reference to the fourth possible implementation manner of the second aspect, in a fifth possible implementation manner of the second aspect, the second graphic acquired by the processor includes an application graphic, the domain graphic, and a belonging connection graphic, where the application graphic is used to indicate an application, and the belonging connection graphic is used to indicate that there is a belonging relationship between an application and an application domain.

Based on the foregoing technical solutions, according to the application access control method and apparatus in the embodiments of the present invention, a graphic input by a user is acquired, and an access strategy graphic formed by the graphic is converted into an access control strategy that can be identified by a system, so as to control application access according to the access control strategy; in this way, the user can compile access control strategies of applications in the system in a simple, visual, and flexible graphical manner, thereby improving security performance of the system and further improving user experience.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic flowchart of an application access control method according to an embodiment of the present invention;
FIG. 2 is a schematic flowchart of a method for acquiring a graphic input by a user according to an embodiment of the present invention;
FIG. 3 is a schematic block diagram of a first interface according to an embodiment of the present invention;
FIG. 4A and FIG. 4B are schematic block diagrams of an access strategy graphic according to an embodiment of the present invention;
FIG. 5 is another schematic block diagram of a first interface according to an embodiment of the present invention;
FIG. 6 is another schematic block diagram of an access strategy graphic according to an embodiment of the present invention;
FIG. 7 is another schematic flowchart of a method for acquiring a graphic input by a user according to an embodiment of the present invention;
FIG. 8 is a schematic block diagram of a second interface according to an embodiment of the present invention;
FIG. 9 is still another schematic block diagram of an access strategy graphic according to an embodiment of the present invention;
FIG. 10 is a schematic flowchart of a method for converting an access strategy graphic according to an embodiment of the present invention;
FIG. 11 is a schematic block diagram of an application access control apparatus according to an embodiment of the present invention;
FIG. 12 is another schematic block diagram of an application access control apparatus according to an embodiment of the present invention;
FIG. 13 is still another schematic block diagram of an application access control apparatus according to an embodiment of the present invention;
FIG. 14 is a schematic block diagram of a converting module according to an embodiment of the present invention;
FIG. 15 is a schematic block diagram of an application access control apparatus according to another embodiment of the present invention; and
FIG. 16 is another schematic block diagram of an application access control apparatus according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

It should be understood that the technical solutions in the embodiments of the present invention may be applied to mobile terminals based on various operating systems, where the operating systems include, for example, an Android (Android) operating system, an Apple (iOS) operating system, a Microsoft (Windows Phone) operating system, a Symbian (Symbian) operating system, a BlackBerry (BlackBerry OS) operating system, and a Microsoft (Windows Mobile) operating system. For ease of description, in the embodiments of the present invention, the Android operating system is merely used as an example for description, but the present invention is not limited thereto.

It should also be understood that in the embodiments of the present invention, a mobile terminal may communicate with one or more core networks by using a radio access network (Radio Access Network, "RAN" for short). The mobile terminal may be referred to as an access terminal, user equipment (User Equipment, "UE" for short), a subscriber unit, a subscriber station, a mobile station, a remote station, a remote terminal, a mobile device, a user terminal, a terminal, a wireless communications device, a user agent, or a user apparatus. The access terminal may be a cellular phone, a cordless phone, a Session Initiation Protocol (Session Initiation Protocol, "SIP" for short) phone, a wireless local loop (Wireless Local Loop, "WLL" for short) station, a personal digital assistant (Personal Digital Assistant, PDA for short), a handheld device having a wireless communication function, a computing device, another processing device connected to a wireless modem, an in-vehicle device, a wearable device, and a terminal device in a future 5G network.

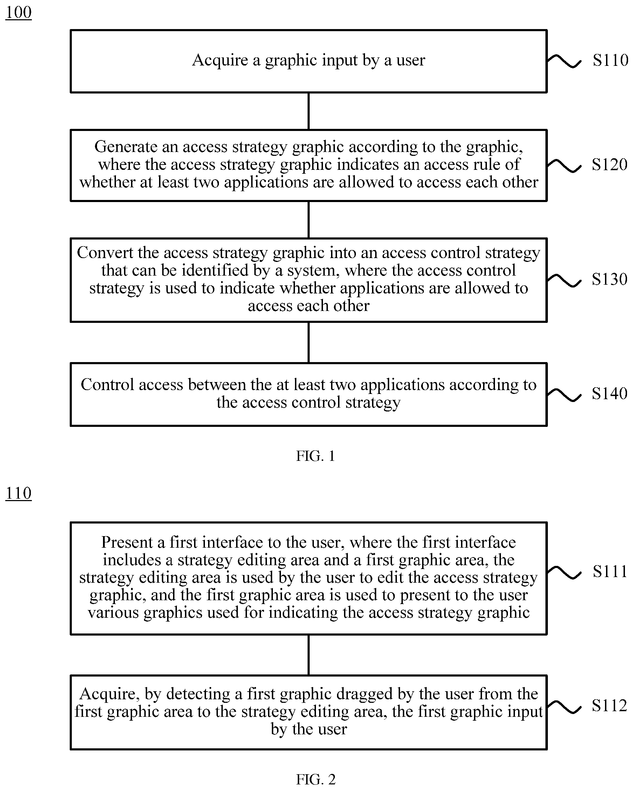

FIG. 1 is a schematic flowchart of an application access control method 100 according to an embodiment of the present invention. The method 100 may be executed by, for example, a mobile terminal, and the mobile terminal is, for example, a mobile phone. As shown in FIG. 1, the method 100 includes:

S110: Acquire a graphic input by a user.

S120: Generate an access strategy graphic according to the graphic, where the access strategy graphic indicates an access rule of whether at least two applications are allowed to access each other.

S130: Convert the access strategy graphic into an access control strategy that can be identified by a system, where the access control strategy is used to indicate whether applications are allowed to access each other.

S140: Control access between the at least two applications according to the access control strategy.

Specifically, the mobile terminal acquires, for example, a graphic that is input by a user in a manner of selection, dragging, or drawing, and generates an access strategy graphic that is formed by graphics and that is embodied in a simple, visual, and flexible manner, where the access strategy graphic may indicate an access rule of whether applications are allowed to access each other; therefore, the mobile terminal may convert the access strategy graphic into an access control strategy that can be identified by a system; in this way, the mobile terminal can control access between the applications according to the access control strategy, to improve security performance of the system.

Therefore, according to the application access control method in this embodiment of the present invention, a graphic input by a user is acquired, and an access strategy graphic formed by the graphic is converted into an access control strategy that can be identified by a system, so as to control application access according to the access control strategy; in this way, the user can compile access control strategies of applications in the system in a simple, visual, and flexible graphical manner, thereby improving security performance of the system and further improving user experience.

In another aspect, according to the application access control method in this embodiment of the present invention, an access strategy graphic can be generated in real time according to an acquired graphic, and the access strategy graphic is converted into an access control strategy; in this way, the access control strategy can be updated dynamically, and application access is controlled dynamically according to the access control strategy, thereby overcoming a defect in the prior art that an access control strategy can be allocated only when an application is installed and cannot be dynamically adjusted according to actual needs; therefore, flexibility and practicability of system security management is improved.

In still another aspect, according to the application access control method in this embodiment of the present invention, an access strategy graphic formed by a graphic can be converted into an access control strategy that can be identified by a system, and manual entering of a large quantity of characters to compile an access control strategy is avoided; therefore, compilation of an access control strategy can be simplified, which can further improve user experience.

In S110, the terminal device may acquire a graphic input by the user in various manners.

Specifically, in this embodiment of the present invention, the user can compile or formulate an access control strategy in a graphical manner. Particularly, the user may input a graphic in various manners, to embody an access control strategy that the user expects to compile or formulate an access rule. For example, the user may input a graphic in a manner of selecting the graphic, specifying the graphic, dragging the graphic, drawing the graphic, or the like. Correspondingly, the mobile terminal may acquire the graphic, which is input by the user in various manners such as selecting the graphic, specifying the graphic, dragging the graphic, or drawing the graphic, and may generate an access strategy graphic according to the graphic, to indicate an access rule of whether at least two applications are allowed to access each other.

For example, the user may draw a graphic that satisfies a predetermined rule or conforms to predetermined semantics on a display screen of the mobile terminal, and the mobile terminal acquires, by identifying the graphic drawn by the user, the graphic input by the user, and generates an access strategy graphic formed by the graphic input by the user; for another example, the mobile terminal may display elements of an access strategy graphic in a graphical manner, and the user only needs to select a corresponding graphic, to embody an access rule between applications that the user expects to determine, and therefore, the mobile terminal may acquire the graphic selected or specified by the user, and generate a corresponding access strategy graphic. Preferably, to further improve user experience and simplify formulation of an access control strategy, the terminal device may further acquire a graphic input by the user in another manner, and generate a corresponding access strategy graphic. The following provides descriptions with reference to FIG. 2 to FIG. 9 separately.

As shown in FIG. 2, optionally, the acquiring a graphic input by a user includes:

S111: Present a first interface to the user, where the first interface includes a strategy editing area and a first graphic area, the strategy editing area is used by the user to edit the access strategy graphic, and the first graphic area is used to present to the user various graphics used for indicating the access strategy graphic.

S112: Acquire, by detecting a first graphic dragged by the user from the first graphic area to the strategy editing area, the first graphic input by the user.

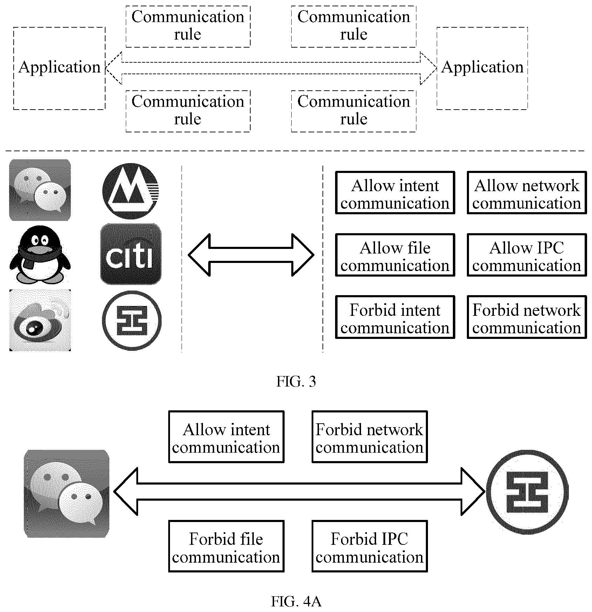

Specifically, the mobile terminal may provide the user with a first interface shown in FIG. 3, where the first interface may include a strategy editing area and a first graphic area, the strategy editing area may be used by the user to edit the access strategy graphic, and the first graphic area may be used to present to the user various graphics used for indicating the access strategy graphic; therefore, the mobile terminal may acquire, by detecting a first graphic dragged by the user from the first graphic area to the strategy editing area, the first graphic input by the user, and may generate the access strategy graphic according to the first graphic.

For example, as shown in FIG. 3, an upper part of the first interface may be the strategy editing area, where strategy editing prompts may be set in the strategy editing area, as shown in dashed line boxes in FIG. 3, to prompt the user to drag a corresponding graphic in the first graphic area to the corresponding strategy editing area, thereby forming a graphical strategy used to indicate an access rule between applications. A lowerpart of the first interface may be the first graphic area, where the first graphic area may include graphics showing elements of the strategy. For example, the first graphic area may include icons of various applications, such as an application icon of WeChat, an application icon of China Merchants Bank, an application icon of QQ, an application icon of Citibank, an application icon of a microblog, or an application icon of Industrial and Commercial Bank of China; the first graphic area may further include graphics indicating access rules between applications, such as a graphic for allowing intent communication, a graphic for allowing network communication, a graphic for allowing file communication, a graphic for allowing IPC communication, a graphic for forbidding intent communication, and a graphic for forbidding network communication; for another example, the first graphic area may further include a graphic of a communications connection between applications; for still another example, the first graphic area may further include a graphic of an application domain formed by one or more applications whose attributes are the same.

Optionally, in this embodiment of the present invention, the first graphic includes an application graphic, an inter-application communications connection graphic, and an inter-application access rule graphic, where the application graphic is used to indicate an application, the inter-application communications connection graphic is used to indicate that there is a communications connection between applications, and the inter-application access rule graphic is used to indicate whether applications are allowed to access each other.

In this embodiment of the present invention, optionally, the access rule indicates whether the at least two applications are allowed to access each other in at least one communication manner of inter-process communication (IPC), network communication, file system communication, and intent communication, for example, access between applications in the network communication manner is allowed, or access between applications in the intent communication manner is forbidden.

In this embodiment of the present invention, the user may drag a graphic in the first graphic area to the strategy editing area, to embody an access control strategy or an access rule that the user expects to compile or formulate; therefore, the mobile terminal may acquire, by detecting a first graphic dragged by the user from the first graphic area drag to the strategy editing area, the first graphic input by the user, and may generate, according to the first graphic, an access strategy graphic used to indicate an access rule of whether applications are allowed to access each other.

For example, when the user hopes to compile or formulate an access rule between a WeChat application and an Industrial and Commercial Bank of China application, the user may drag a WeChat application icon and an Industrial and Commercial Bank of China application icon in the first graphic area to the strategy editing area, and may connect the two application icons by using an inter-application communications connection graphic, to indicate that there is a communications connection between the two applications. If the user determines, from the view of system security, that only the intent communication manner is allowed between the two applications, and the network communication manner, the file communication manner, and the IPC communication manner are not allowed, the user may drag a corresponding inter-application access rule graphic from the first graphic area to the strategy editing area; therefore, the mobile terminal may acquire, by detecting a first graphic dragged by the user from the first graphic area to the strategy editing area, the first graphic input by the user, and may generate, according to the first graphic input by the user, an access strategy graphic shown in FIG. 4A.

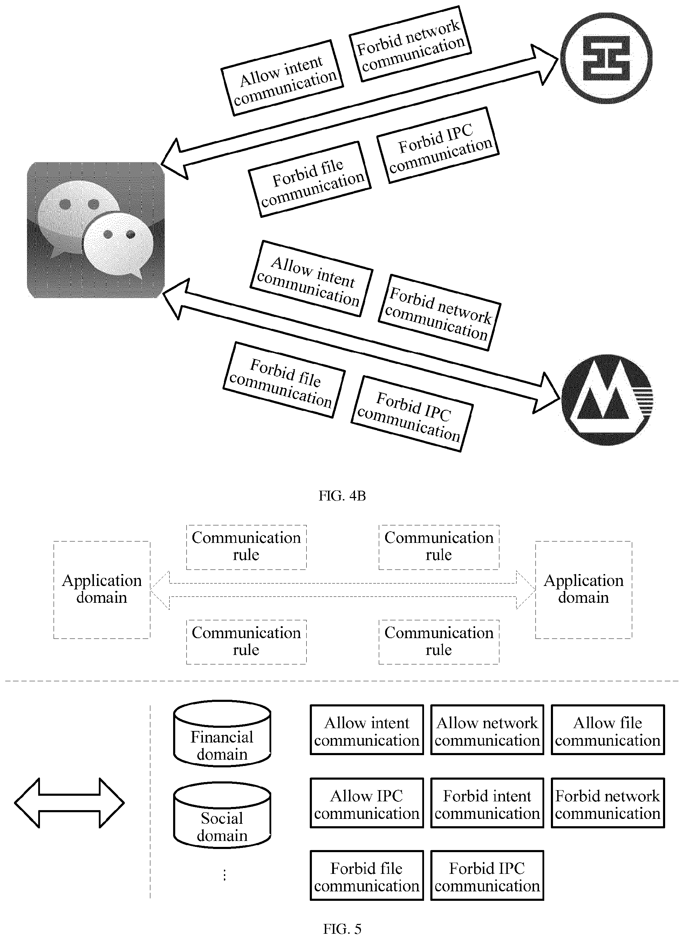

For another example, an access strategy graphic may also be used by the user to embody an access rule between multiple applications. For example, as shown in FIG. 4B, the access strategy graphic may further indicate that only the intent communication manner is allowed between the WeChat application and a China Merchants Bank application, and the network communication manner, the file communication manner, and the IPC communication manner are not allowed either.

It should be understood that in this embodiment of the present invention, the access strategy graphics shown in FIG. 4A and FIG. 4B are merely used as examples for description, but the present invention is not limited thereto. For example, the first graphic area may further include another type of graphic, and a corresponding access strategy graphic may also be formed by another type of first graphic.

In this embodiment of the present invention, optionally, the first graphic includes a domain graphic, an inter-domain communications connection graphic, and an inter-domain access rule graphic; or the first graphic includes an application graphic, a domain graphic, an inter-domain communications connection graphic, and an inter-domain access rule graphic, where the application graphic is used to indicate an application, the domain graphic is used to indicate an application domain formed by one or more applications whose attributes are the same, the inter-domain communications connection graphic is used to indicate that there is a communications connection between application domains, and the inter-domain access rule graphic indicates whether application domains are allowed to access each other.

It should be understood that in this embodiment of the present invention, specifically, an application domain may include one or more applications, and therefore, an application may also be considered as a particular example of an application domain; therefore, the inter-domain communications connection graphic may be further used to indicate that a communications connection exits between an application and an application domain or between applications, and the inter-domain access rule graphic may further indicate an access rule between an application and an application domain or between applications.

For example, as shown in FIG. 5, the first interface may include a strategy editing area and a first graphic area, where the strategy editing area may be located in an upper part of the first interface, strategy editing prompts may be set in the strategy editing area, as shown in dashed line boxes in FIG. 5, to prompt the user to drag a corresponding graphic in the first graphic area to the corresponding strategy editing area, thereby forming an access strategy graphic used to indicate an access rule between applications or between an application and an application domain or between application domains.

The first graphic area may be located in a lower part of the first interface, and may include graphics showing elements of the strategy. For example, the first graphic area may include icons of various application domains, such as a graphic of a financial domain and a graphic of a social domain; the first graphic area may include graphics indicating access rules between applications, such as a graphic for allowing intent communication, a graphic for allowing network communication, a graphic for allowing file communication, a graphic for allowing IPC communication, a graphic for forbidding intent communication, a graphic for forbidding network communication, a graphic for forbidding file communication, and a graphic for forbidding IPC communication; for another example, the first graphic area may further include a graphic used to indicate a communications connection between application domains or between an application and an application domain.

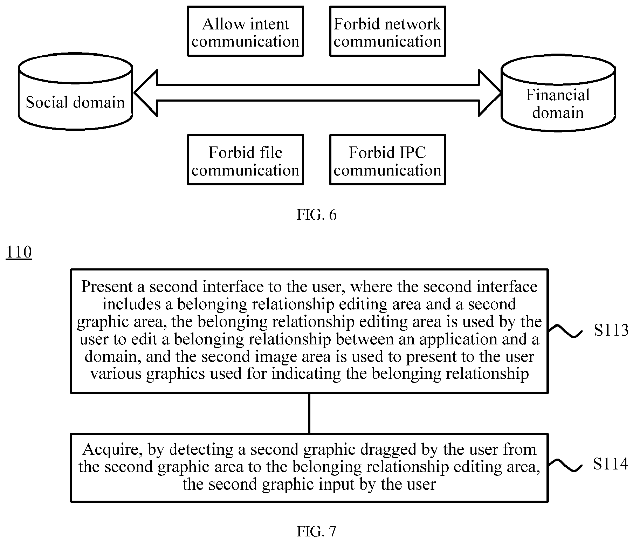

Similarly, the mobile terminal may acquire, by detecting a first graphic dragged by the user from the first graphic area to the strategy editing area, the first graphic input by the user, and the mobile terminal may generate an access strategy graphic according to the first graphic, where the access strategy graphic is, for example, shown in FIG. 6, and the access strategy graphic indicates that the intent communication manner is allowed for access between the social domain and the financial domain, but access or communication in the network communication manner, the file communication manner, and the IPC communication manner is forbidden.

FIG. 7 is another schematic flowchart of a method 110 for acquiring a graphic input by a user according to an embodiment of the present invention. As shown in FIG. 7, the acquiring a graphic input by a user further includes:

S113: Present a second interface to the user, where the second interface includes a belonging relationship editing area and a second graphic area, the belonging relationship editing area is used by the user to edit a belonging relationship between an application and a domain, and the second graphic area is used to present to the user various graphics used for indicating the belonging relationship.

S114: Acquire, by detecting a second graphic dragged by the user from the second graphic area to the belonging relationship editing area, the second graphic input by the user.

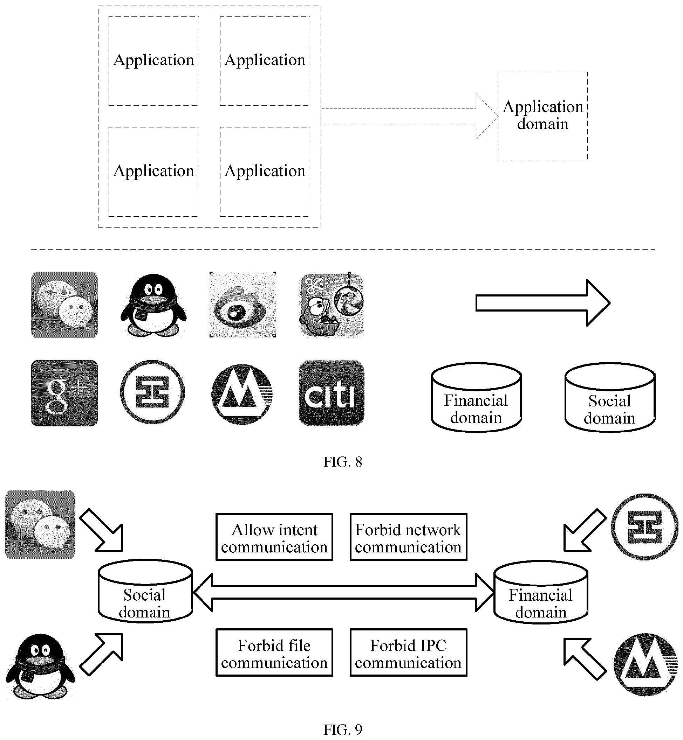

Specifically, the mobile terminal may further provide the user with a second interface shown in FIG. 8, where the second interface may include a strategy editing area and a second graphic area; the mobile terminal may acquire, by detecting a second graphic dragged by the user from the second graphic area to the strategy editing area, the second graphic input by the user; therefore, the mobile terminal may generate the access strategy graphic according to the first graphic and the second graphic.

It should be understood that in this embodiment of the present invention, the mobile terminal may also generate a belonging relationship graphic only according to the second graphic; or the mobile terminal may update the already generated access strategy graphic according to a belonging relationship graphic, that is, the mobile terminal may generate an updated access strategy graphic according to a belonging relationship graphic and the already generated access strategy graphic, but this embodiment of the present invention is not limited thereto.

Optionally, in this embodiment of the present invention, the second graphic includes an application graphic, the domain graphic, and a belonging connection graphic, where the application graphic is used to indicate an application, the belonging connection graphic is used to indicate that there is a belonging relationship between an application and an application domain.

Specifically, for example, as shown in FIG. 8, the second interface may include a belonging relationship editing area located in an upper part of the interface and a second graphic area located in a lower part of the interface, where the belonging relationship editing area is used by the user to edit a belonging relationship between an application and a domain, and belonging relationship editing prompts shown in dashed line boxes in FIG. 8 may also be set in the belonging relationship editing area, to prompt the user to drag a second graphic in the second graphic area to the corresponding belonging relationship editing area, thereby indicating a belonging relationship between an application and an application domain; the second graphic area may be used to present to the user various graphics used to indicate belonging relationships, such as an application graphic, a domain graphic, and a belonging connection graphic.

Therefore, an access strategy graphic including a belonging relationship between an application and an application domain may be shown in FIG. 9. In FIG. 9, not only an access rule between the social domain and the financial domain is shown, but it is also shown that the social domain includes the WeChat application and the QQ application and the financial domain includes the Industrial and Commercial Bank of China application and the China Merchants Bank application.

It should be understood that in this embodiment of the present invention, the second graphic including the application graphic, the domain graphic, and the belonging connection graphic is merely used as an example for description, but the present invention is not limited thereto. For example, the second graphic may include only the application graphic and the domain graphic, according to which a belonging relationship between an application and an application domain can also be determined.

It should be understood that in this embodiment of the present invention, the access strategy graphics shown in FIG. 4A, FIG. 4B, FIG. 6, and FIG. 9 are merely used as examples for description, but the present invention is not limited thereto. For example, the access strategy graphic may also indicate an access rule between an application and an application domain.

It should also be understood that in this embodiment of the present invention, the first interface may be presented alone on the display screen of the mobile terminal, so that the user sets an access rule between applications or between an application and an application domain or between application domains; the second interface may also be presented alone on the display screen of the mobile terminal, so that the user sets a belonging relationship between an application and an application domain; the first interface and the second interface may also be presented together on the display screen of the mobile terminal, so that the user sets an access rule and a belonging relationship simultaneously.

Therefore, according to the application access control method in this embodiment of the present invention, a graphic input by a user is acquired, and an access strategy graphic formed by the graphic is converted into an access control strategy that can be identified by a system, so as to control application access according to the access control strategy; in this way, the user can compile access control strategies of applications in the system in a simple, visual, and flexible graphical manner, thereby improving security performance of the system and further improving user experience.

In S120, the mobile terminal may generate an access strategy graphic according to the graphic input by the user, where the access strategy graphic indicates an access rule of whether at least two applications are allowed to access each other.

Specifically, for example, the mobile terminal may generate, by organizing the graphic input by the user, the access strategy graphic shown in FIG. 4A, FIG. 4B, FIG. 6, or FIG. 9; for another example, the mobile terminal may also directly determine that the graphic dragged by the user to the strategy editing area is the access strategy graphic; for still another example, the mobile terminal may also generate, according to a generating rule of the access strategy graphic and the graphic dragged by the user to the strategy editing area, the access strategy graphic.

In this process, the mobile terminal may further interact with the user, to generate the access strategy graphic that meets the expectation of the user; certainly, in this process, the mobile terminal may further prompt the user, so that the user inputs a correct graphic. In this embodiment of the present invention, optionally, the method further includes: when the graphic input by the user does not conform to a generating rule of the access strategy graphic, prompting the user with an input error.

Specifically, the mobile terminal may determine or generate, according to the first graphic selected or input by the user, the access strategy graphic that the user expects to input; or the mobile terminal may determine or generate, according to the first graphic and the second graphic that are selected or input by the user, the access strategy graphic the user expects to input. When the access strategy graphic formed by the graphic selected or input by the user does not conform to a syntax rule, or when the graphic selected or input by the user cannot constitute an access strategy graphic, the mobile terminal may prompt the user with an input error, and may further lead the user to form an access strategy graphic that conform to the syntax rule. For example, the mobile terminal may provide the dashed line boxes shown in FIG. 3, FIG. 5, and FIG. 8, to lead the user to select or input a graphic; for another example, the mobile terminal may provide a specific example or a detailed description, to lead the user to learn to construct an access strategy graphic.

When the access strategy graphic formed by the graphic selected or input by the user conforms to the syntax rule, the mobile terminal may compile, in real time, the access strategy graphic into an access control strategy that can be identified by a system, and may control access between a first application and a second application according to the access control strategy.

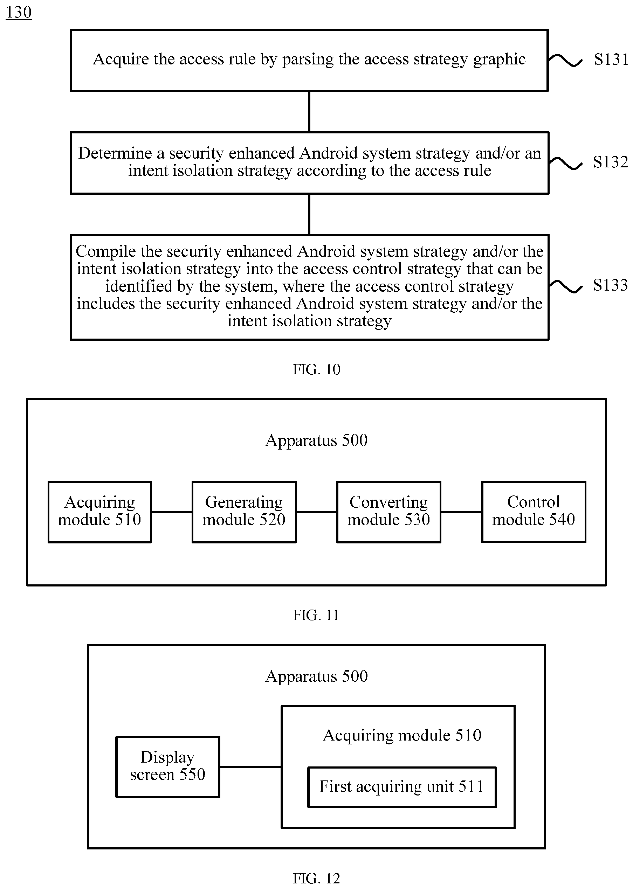

Specifically, in S130, as shown in FIG. 10, the converting the access strategy graphic into an access control strategy that can be identified by a system includes:

S131: Acquire the access rule by parsing the access strategy graphic.

S132: Determine a security enhanced Android system strategy and/or an intent isolation strategy according to the access rule.

S133: Compile the security enhanced Android system strategy and/or the intent isolation strategy into the access control strategy that can be identified by the system, where the access control strategy includes the security enhanced Android system strategy and/or the intent isolation strategy.

Specifically, in this embodiment of the present invention, the mobile terminal may determine, according to the first graphic input by the user or according to the first graphic and the second graphic that are selected or input by the user, the access strategy graphic or the access control strategy that the user expects to input; the mobile terminal may acquire, by further parsing the access strategy graphic, an access rule between at least one first application and at least one second application. It should be understood that the access rule may include an access rule between one first application and one second application, that is, an access rule between applications; the access rule may further include an access rule between one first application and multiple second applications, that is, an access rule between an application and an application domain; the access rule may further include an access rule between multiple first applications and multiple second applications, that is, an access rule between application domains.

The mobile terminal may determine, according to the access rule, a security enhanced Android system SEAndroid strategy and/or an intent isolation strategy between applications or between an application and an application domain or between application domains, where the SEAndroid strategy is used to control access between applications or between an application and an application domain or between application domains in at least one communication manner of IPC communication, network communication, and file system communication, that is, whether at least one of the foregoing communication manners is allowed for access; the Intent isolation strategy is used to control access between applications or between an application and an application domain or between application domains in the Intent communication manner, that is, whether the Intent communication manner is allowed for access.

Further, the mobile terminal may compile the security enhanced Android system strategy and/or the intent isolation strategy into the access control strategy that can be identified by the system, where the access control strategy includes the security enhanced Android system strategy and/or the intent isolation strategy. For example, the mobile terminal compiles the security enhanced Android system strategy into a binary access control strategy; for another example, the mobile terminal may compile the intent isolation strategy into an Extensible Markup Language (Extensible Markup Language, "XML" for short) file.

Specifically, when the user allows an application domain A and an application domain B to communicate with each other through IPC, an access control strategy that is formed through compilation and can be identified by the system is, for example,
#Create/access any System V IPC objects
allow A B: {sem msgq shm} *;
allow A B:msg {send receive};
specifically, when the user allows the application domain A and the application domain B to communicate with each other by using a network, an access control strategy that is formed through compilation and can be identified by the system is, for example,
#Connect through socket
allow A dom712_app:tcp_socket {read write getattr getopt shutdown connectto newconn acceptfrom node_bind name_connect};
#Access the network
net_domain(A);
specifically, when the user allows the application domain A and the application domain B to communicate with each other by using a file system, an access control strategy that is formed through compilation and can be identified by the system is, for example,
type A_file;
allow A A_file: file ∼{relabelto};
allow A_file labeledfs:filesystem associate;
file_type_trans(A, file_type, A_file)
type_transition A {file_type -download_file}:dir A_file;
type_transition A {file_type-download_file}:notdevfile_class_set A_file; and
specifically, when the user allows the application domain A and the application domain B to communicate with each other by using an Intent, an access control strategy that is formed through compilation and can be identified by the system is, for example,
<domain id="A">
   <package name="com.tencent.mm"/>
   <package name="renren"/>
</domain>
<domain id="B">
   <package name="icbc"/>
   <package name="huaqi"/>
</domain>
<policy block="false" log="true">
   <from>A</from>
   <to>B</to>
</policy>.

It should be understood that in this embodiment of the present invention, a strategy deployment job can be completed by placing the access control strategy, which is compiled and can be identified by the system, in a position that is in the mobile terminal and is specified by the system, where the SEAndroid strategy may be executed by the SEAndroid, and the Intent isolation strategy may be executed by an extended intent firewall (IntentFirewall) module.

In this embodiment of the present invention, optionally, the access control strategy includes an access control strategy for at least one communication manner of inter-process communication IPC, network communication, file system communication, and intent communication, that is, the access control strategy is used to indicate whether applications are allowed to access each other in at least one communication manner of inter-process communication IPC, network communication, file system communication, and intent communication. It should be understood that intent (Intent) communication is mainly used for communication between components of an Android (Android) application; specifically, Intent communication is responsible for describing an action of an operation in an application, data related to the action, and additional data, and Android is responsible for finding a corresponding component according to the description by the Intent, transporting the Intent to an invoked component, and completing component invoking; therefore, the Intent serves as a media intermediary in communication, and specially provides information related to mutual invocation between components, to implement decoupling between an invoking component and an invoked component.

In S140, the mobile terminal may control access between the at least two applications according to the access control strategy.

For example, for the access strategy graphic shown in FIG. 4A, an access control strategy, which is obtained by the mobile terminal by converting the access strategy graphic, allows applications to access each other in the intent communication manner, and does not allow the applications to access each other in the network communication, file communication, and IPC communication manners. Therefore, for example, when the WeChat application and the Industrial and Commercial Bank of China application access each other in the IPC communication manner, the mobile terminal denies the access; for another example, when the WeChat application and the Industrial and Commercial Bank of China application access each other in the Intent communication manner, the mobile terminal may allow the access.

It should be understood that in this embodiment of the present invention, the access strategy graphic is a graphic that is generated according to a graphic input by a user and is used to indicate an access rule, where the access rule may indicate whether applications are allowed to access each other in a particular communication manner. For example, the access rule may indicate whether applications are allowed to access each other in at least one communication manner of inter-process communication IPC, network communication, file system communication, and intent communication.

It should also be understood that in this embodiment of the present invention, the access control strategy is a strategy that can be identified by the system or the mobile terminal and is used to indicate an access rule, where the strategy may be a binary file, or may be an XML file, but the present invention is not limited thereto; in this embodiment of the present invention, the access control strategy may be generated by the mobile terminal through compilation according to the access strategy graphic. The access control strategy may also indicate whether applications are allowed to access each other in a particular communication manner; for example, the access control strategy may indicate whether applications are allowed to access each other in at least one communication manner of inter-process communication IPC, network communication, file system communication, and intent communication.

It should also be understood that in this embodiment of the present invention, the access control strategy may be classified as a security enhanced Android system strategy or an intent isolation strategy according to specific content of the access control strategy, where the security enhanced Android system strategy may indicate whether applications are allowed to access each other in at least one communication manner of inter-process communication IPC, network communication, and file system communication, and the intent isolation strategy may indicate whether applications are allowed to access each other in an intent communication manner.

It should also be understood that in this embodiment of the present invention, the four communication manners, namely, inter-process communication IPC, network communication, file system communication, and intent communication are merely used as examples for description, but the present invention is not limited thereto.

Therefore, according to the application access control method in this embodiment of the present invention, an access strategy graphic can be generated in real time according to an acquired graphic, and the access strategy graphic is converted into an access control strategy; in this way, the access control strategy can be updated dynamically, and application access is controlled dynamically according to the access control strategy, thereby overcoming a defect in the prior art that an access control strategy can be allocated only when an application is installed and cannot be dynamically adjusted according to actual needs; therefore, flexibility and practicability of system security management can be improved.

In another aspect, according to the application access control method in this embodiment of the present invention, an access strategy graphic formed by a graphic can be converted into an access control strategy that can be identified by a system, and manual entering of a large quantity of characters to compile an access control strategy is avoided; therefore, compilation of an access control strategy can be simplified, which can further improve user experience.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

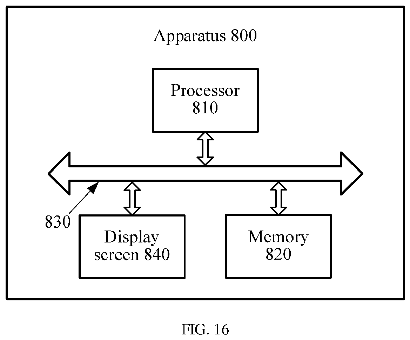

The foregoing describes the application access control method according to the embodiments of the present invention in detail with reference to FIG. 1 to FIG. 10, and the following describes application access control apparatuses according to embodiments of the present invention in detail with reference to FIG. 11 to FIG. 16.

As shown in FIG. 11, a application access control apparatus 500 includes:
an acquiring module 510, configured to acquire a graphic input by a user;
a generating module 520, configured to generate an access strategy graphic according to the graphic acquired by the acquiring module 510, where the access strategy graphic indicates an access rule of whether at least two applications are allowed to access each other;
a converting module 530, configured to convert the access strategy graphic generated by the generating module 520 into an access control strategy that can be identified by a system, where the access control strategy is used to indicate whether applications are allowed to access each other; and
a control module 540, configured to control access between the at least two applications according to the access control strategy obtained by the converting module 530 through conversion.

Therefore, according to the application access control apparatus in this embodiment of the present invention, a graphic input by a user is acquired, and an access strategy graphic formed by the graphic is converted into an access control strategy that can be identified by a system, so as to control application access according to the access control strategy; in this way, the user can compile access control strategies of applications in the system in a simple, visual, and flexible graphical manner, thereby improving security performance of the system and further improving user experience.

In another aspect, according to the application access control apparatus in this embodiment of the present invention, an access strategy graphic can be generated in real time according to an acquired graphic, and the access strategy graphic is converted into an access control strategy; in this way, the access control strategy can be updated dynamically, and application access is controlled dynamically according to the access control strategy, thereby overcoming a defect in the prior art that an access control strategy can be allocated only when an application is installed and cannot be dynamically adjusted according to actual needs; therefore, flexibility and practicability of system security management can be improved.

In still another aspect, according to the application access control apparatus in this embodiment of the present invention, an access strategy graphic formed by a graphic can be converted into an access control strategy that can be identified by a system, and manual entering of a large quantity of characters to compile an access control strategy is avoided; therefore, compilation of an access control strategy can be simplified, which can further improve user experience.

In this embodiment of the present invention, optionally, as shown in FIG. 12, the apparatus 500 further includes:
a display screen 550, configured to present a first interface to the user, where the first interface includes a strategy editing area and a first graphic area, the strategy editing area is used by the user to edit the access strategy graphic, and the first graphic area is used to present to the user various graphics used for indicating the access strategy graphic, where
the acquiring module 510 includes a first acquiring unit 511, configured to acquire, by detecting a first graphic dragged by the user from the first graphic area to the strategy editing area, the first graphic input by the user.

In this embodiment of the present invention, optionally, the first graphic acquired by the first acquiring unit 511 includes an application graphic, an inter-application communications connection graphic, and an inter-application access rule graphic, where the application graphic is used to indicate an application, the inter-application communications connection graphic is used to indicate that there is a communications connection between applications, and the inter-application access rule graphic is used to indicate whether applications are allowed to access each other.

Optionally, in this embodiment of the present invention, the first graphic acquired by the first acquiring unit 511 includes a domain graphic, an inter-domain communications connection graphic, and an inter-domain access rule graphic; or the first graphic acquired by the first acquiring unit 511 includes an application graphic, a domain graphic, an inter-domain communications connection graphic, and an inter-domain access rule graphic, where the application graphic is used to indicate an application, the domain graphic is used to indicate an application domain formed by one or more applications whose attributes are the same, the inter-domain communications connection graphic is used to indicate that there is a communications connection between application domains, and the inter-domain access rule graphic indicates an access rule between application domains.

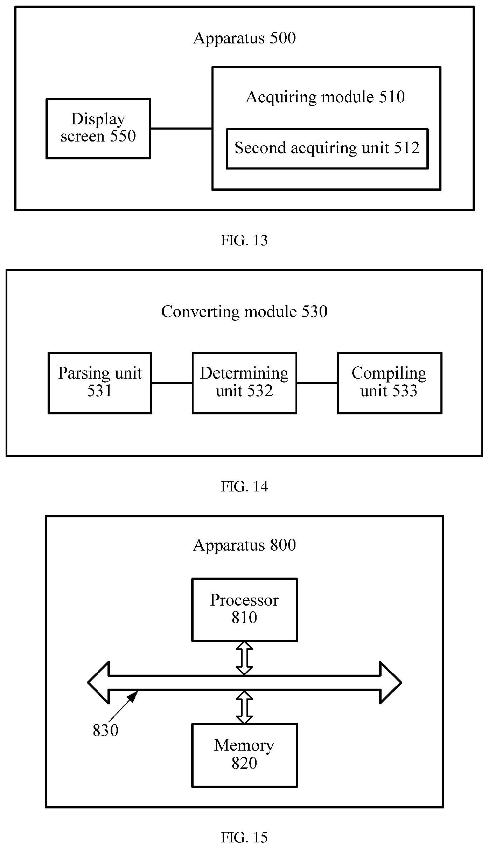

In this embodiment of the present invention, optionally, as shown in FIG. 13, the display screen 550 is further configured to present a second interface to the user, where the second interface includes a belonging relationship editing area and a second graphic area, the belonging relationship editing area is used by the user to edit a belonging relationship between an application and a domain, and the second graphic area is used to present to the user various graphics used for indicating the belonging relationship, where
the acquiring module 510 further includes a second acquiring unit 512, configured to acquire, by detecting a second graphic dragged by the user from the second graphic area to the belonging relationship editing area, the second graphic input by the user.

Optionally, in this embodiment of the present invention, the second graphic acquired by the second acquiring unit 512 includes an application graphic, the domain graphic, and a belonging connection graphic, where the application graphic is used to indicate an application, and the belonging connection graphic is used to indicate that there is a belonging relationship between an application and an application domain.

Optionally, in this embodiment of the present invention, the display screen 550 is further configured to: when the graphic input by the user does not conform to a generating rule of the access strategy graphic, prompt the user with an input error.

In this embodiment of the present invention, optionally, as shown in FIG. 14, the converting module 530 includes:
a parsing unit 531, configured to acquire the access rule by parsing the access strategy graphical;
a determining unit 532, configured to determine a security enhanced Android system strategy and/or an intent isolation strategy according to the access rule; and
a compiling unit 533, configured to compile the security enhanced Android system strategy and/or the intent isolation strategy into the access control strategy that can be identified by the system, where the access control strategy includes the security enhanced Android system strategy and/or the intent isolation strategy.

In this embodiment of the present invention, optionally, the access rule indicates whether the at least two applications are allowed to access each other in at least one communication manner of inter-process communication IPC, network communication, file system communication, and intent communication.

Optionally, in this embodiment of the present invention, the apparatus 500 is a mobile terminal.

It should be understood that the application access control apparatus 500 according to this embodiment of the present invention may correspond to the entity for executing the method in the embodiments of the present invention, and the foregoing and other operations and/or functions of the modules in the apparatus 500 are for separately implementing corresponding procedures of the method 100 in FIG. 1 to FIG. 10, and for brevity, details are not described herein.

Therefore, according to the application access control apparatus in this embodiment of the present invention, a graphic input by a user is acquired, and an access strategy graphic formed by the graphic is converted into an access control strategy that can be identified by a system, so as to control application access according to the access control strategy; in this way, the user can compile access control strategies of applications in the system in a simple, visual, and flexible graphical manner, thereby improving security performance of the system and further improving user experience.

In another aspect, according to the application access control apparatus in this embodiment of the present invention, an access strategy graphic can be generated in real time according to an acquired graphic, and the access strategy graphic is converted into an access control strategy; in this way, the access control strategy can be updated dynamically, and application access is controlled dynamically according to the access control strategy, thereby overcoming a defect in the prior art that an access control strategy can be allocated only when an application is installed and cannot be dynamically adjusted according to actual needs; therefore, flexibility and practicability of system security management can be improved.

In still another aspect, according to the application access control apparatus in this embodiment of the present invention, an access strategy graphic formed by a graphic can be converted into an access control strategy that can be identified by a system, and manual entering of a large quantity of characters to compile an access control strategy is avoided; therefore, compilation of an access control strategy can be simplified, which can further improve user experience.

As shown in FIG. 15, an embodiment of the present invention further provides an application access control apparatus 800, where the apparatus includes a processor 810, a memory 820, and a bus system 830, the processor 810 and the memory 820 are connected to each other by using the bus system 830, the memory 820 is configured to store an instruction, and the processor 810 is configured to execute the instruction stored in the memory 820, where the processor 810 is configured to:
acquire a graphic input by a user;
generate an access strategy graphic according to the graphic, where the access strategy graphic indicates an access rule of whether at least two applications are allowed to access each other;
convert the access strategy graphic into an access control strategy that can be identified by a system, where the access control strategy is used to indicate whether applications are allowed to access each other; and
control access between the at least two applications according to the access control strategy.

Therefore, according to the application access control apparatus in this embodiment of the present invention, a graphic input by a user is acquired, and an access strategy graphic formed by the graphic is converted into an access control strategy that can be identified by a system, so as to control application access according to the access control strategy; in this way, the user can compile access control strategies of applications in the system in a simple, visual, and flexible graphical manner, thereby improving security performance of the system and further improving user experience.

In another aspect, according to the application access control apparatus in this embodiment of the present invention, an access strategy graphic can be generated in real time according to an acquired graphic, and the access strategy graphic is converted into an access control strategy; in this way, the access control strategy can be updated dynamically, and application access is controlled dynamically according to the access control strategy, thereby overcoming a defect in the prior art that an access control strategy can be allocated only when an application is installed and cannot be dynamically adjusted according to actual needs; therefore, flexibility and practicability of system security management can be improved.

In still another aspect, according to the application access control apparatus in this embodiment of the present invention, an access strategy graphic formed by a graphic can be converted into an access control strategy that can be identified by a system, and manual entering of a large quantity of characters to compile an access control strategy is avoided; therefore, compilation of an access control strategy can be simplified, which can further improve user experience.

It should be understood that in this embodiment of the present invention, the processor 810 may be a central processing unit (Central Processing Unit, "CPU" for short), or the processor 810 may be another general purpose processor, digital signal processor (DSP), application-specific integrated circuit (ASIC), or field-programmable gate array (FPGA), or another programmable logic device, discrete gate or transistor logic device, independent hardware component, or the like. The general purpose processor may be a microprocessor or the processor may also be any conventional processor or the like.

The memory 820 may include a read-only memory and a random access memory, and provide an instruction and data to the processor 810. The memory 820 may further include a nonvolatile random access memory. For example, the memory 820 may further store information about a device type.

The bus system 830, besides including a data bus, may further include a power bus, a control bus, a status signal bus, and the like. However, for a purpose of a clear explanation, all buses are marked as the bus system 830 in the figure.

In an implementation process, the steps of the foregoing method may be completed by using an integrated logic circuit of hardware in the processor 810 or instructions in a software form. The steps of the method disclosed with reference to the embodiments of the present invention may be directly performed by a hardware processor, or may be performed by using a combination of hardware in the processor and a software module. The software module may be located in a mature storage medium in the art, such as a random access memory, a flash memory, a read-only memory, a programmable read-only memory, an electronically erasable programmable memory, or a register. The storage medium is located in the memory 820, and the processor 810 reads information in the memory 820, and completes the steps of the method in combination with the hardware thereof. To avoid repetition, details are not described herein.

In this embodiment of the present invention, optionally, the apparatus 800 further includes:
a display screen 840, configured to present a first interface to the user, where the first interface includes a strategy editing area and a first graphic area, the strategy editing area is used by the user to edit the access strategy graphic, and the first graphic area is used to present to the user various graphics used for indicating the access strategy graphic, where
the acquiring, by the processor 810, a graphic input by a user specifically includes:
   acquiring, by detecting a first graphic dragged by the user from the first graphic area to the strategy editing area, the first graphic input by the user.

In this embodiment of the present invention, optionally, the first graphic acquired by the processor 810 includes an application graphic, an inter-application communications connection graphic, and an inter-application access rule graphic, where the application graphic is used to indicate an application, the inter-application communications connection graphic is used to indicate that there is a communications connection between applications, and the inter-application access rule graphic is used to indicate whether applications are allowed to access each other.

In this embodiment of the present invention, optionally, the first graphic acquired by the processor 810 includes a domain graphic, an inter-domain communications connection graphic, and an inter-domain access rule graphic; or the first graphic acquired by the processor 810 includes an application graphic, a domain graphic, an inter-domain communications connection graphic, and an inter-domain access rule graphic, where the application graphic is used to indicate an application, the domain graphic is used to indicate an application domain formed by one or more applications whose attributes are the same, the inter-domain communications connection graphic is used to indicate that there is a communications connection between application domains, and the inter-domain access rule graphic indicates whether application domains are allowed to access each other.

In this embodiment of the present invention, optionally, the display screen 840 is further configured to:
present a second interface to the user, where the second interface includes a belonging relationship editing area and a second graphic area, the belonging relationship editing area is used by the user to edit a belonging relationship between an application and a domain, and the second graphic area is used to present to the user various graphics used for indicating the belonging relationship, where
the acquiring, by the processor 810, a graphic input by a user specifically further includes:
   acquiring, by detecting a second graphic dragged by the user from the second graphic area to the belonging relationship editing area, the second graphic input by the user.

In this embodiment of the present invention, optionally, the second graphic acquired by the processor 810 includes an application graphic, the domain graphic, and a belonging connection graphic, where the application graphic is used to indicate an application, and the belonging connection graphic is used to indicate that there is a belonging relationship between an application and an application domain.

In this embodiment of the present invention, optionally, the display screen 840 is further configured to: when the processor 810 determines that the graphic input by the user does not conform to a generating rule of the access strategy graphic, prompt the user with an input error.

In this embodiment of the present invention, optionally, the converting, by the processor 810, the access strategy graphic into an access control strategy that can be identified by a system specifically includes:
acquiring the access rule by parsing the access strategy graphic;
determining a security enhanced Android system strategy and/or an intent isolation strategy according to the access rule; and
compiling the security enhanced Android system strategy and/or the intent isolation strategy into the access control strategy that can be identified by the system, where the access control strategy includes the security enhanced Android system strategy and/or the intent isolation strategy.

In this embodiment of the present invention, optionally, the access rule indicates whether the at least two applications are allowed to access each other in at least one communication manner of inter-process communication IPC, network communication, file system communication, and intent communication.

In this embodiment of the present invention, optionally, the apparatus 800 is a mobile terminal.

The application access control apparatus 800 according to this embodiment of the present invention may correspond to the mobile terminal and the apparatus 500 in the embodiments of the present invention, and the foregoing and other operations and/or functions of the modules in the apparatus 800 are for separately implementing corresponding procedures of the method 100 in FIG. 1 to FIG. 10, and for brevity, details are not described herein.

Therefore, according to the application access control apparatus in this embodiment of the present invention, a graphic input by a user is acquired, and an access strategy graphic formed by the graphic is converted into an access control strategy that can be identified by a system, so as to control application access according to the access control strategy; in this way, the user can compile access control strategies of applications in the system in a simple, visual, and flexible graphical manner, thereby improving security performance of the system and further improving user experience.

In another aspect, according to the application access control apparatus in this embodiment of the present invention, an access strategy graphic can be generated in real time according to an acquired graphic, and the access strategy graphic is converted into an access control strategy; in this way, the access control strategy can be updated dynamically, and application access is controlled dynamically according to the access control strategy, thereby overcoming a defect in the prior art that an access control strategy can be allocated only when an application is installed and cannot be dynamically adjusted according to actual needs; therefore, flexibility and practicability of system security management can be improved.

In still another aspect, according to the application access control apparatus in this embodiment of the present invention, an access strategy graphic formed by a graphic can be converted into an access control strategy that can be identified by a system, and manual entering of a large quantity of characters to compile an access control strategy is avoided; therefore, compilation of an access control strategy can be simplified, which can further improve user experience.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. An application access control method performed by a mobile terminal, the method comprising:
• acquiring (S110) a graphic input by a user;
• generating (S120) an access strategy graphic according to the graphic, wherein the access strategy graphic indicates at least some of the following multiple access rules between at least two applications:
∘ whether the at least two applications are allowed to access each other in an inter-process communication manner;
∘ whether the at least two applications are allowed to access each other in a network communication manner;
∘ whether the at least two applications are allowed to access each other in a file system communication manner; or
∘ whether the at least two applications are allowed to access each other in an intent communication manner;
• converting (S130) the access strategy graphic into an access control strategy that can be identified by a system, wherein the access control strategy is used to indicate the access rules for the at least two applications accessing each other; and
• controlling (S140) access between the at least two applications according to the access control strategy.

2. The method according to claim 1, wherein the acquiring (S110) the graphic input by the user comprises:
presenting (S111) a first interface to the user, wherein the first interface comprises a strategy editing area and a first graphic area, the strategy editing area is used by the user to edit the access strategy graphic, and the first graphic area is used to present to the user various graphics used for indicating the access strategy graphic; and
acquiring (S112), by detecting a first graphic dragged by the user from the first graphic area to the strategy editing area, the first graphic input by the user.

3. The method according to claim 2, wherein the first graphic comprises an application graphic, an inter-application communications connection graphic, and an inter-application access rule graphic, wherein the application graphic is used to indicate an application, the inter-application communications connection graphic is used to indicate that there is a communications connection between applications, and the inter-application access rule graphic is used to indicate whether applications are allowed to access each other.

4. The method according to claim 2 or 3, wherein the first graphic comprises a domain graphic, an inter-domain communications connection graphic, and an inter-domain access rule graphic; or the first graphic comprises an application graphic, a domain graphic, an inter-domain communications connection graphic, and an inter-domain access rule graphic, wherein the application graphic is used to indicate an application, the domain graphic is used to indicate an application domain formed by one or more applications whose attributes are the same, the inter-domain communications connection graphic is used to indicate that there is a communications connection between application domains, and the inter-domain access rule graphic indicates whether application domains are allowed to access each other.

5. The method according to claim 4, wherein the acquiring (S110) the graphic input by the user further comprises:
presenting (S113) a second interface to the user, wherein the second interface comprises a belonging relationship editing area and a second graphic area, the belonging relationship editing area is used by the user to edit a belonging relationship between an application and a domain, and the second graphic area is used to present to the user various graphics used for indicating the belonging relationship; and
acquiring (S114), by detecting a second graphic dragged by the user from the second graphic area to the belonging relationship editing area, the second graphic input by the user.

6. The method according to claim 5, wherein the second graphic comprises an application graphic, the domain graphic, and a belonging connection graphic, wherein the application graphic is used to indicate an application, and the belonging connection graphic is used to indicate that there is a belonging relationship between an application and an application domain.

7. The method according to any one of claims 2 to 6, wherein the method further comprises:
when the graphic input by the user does not conform to a generating rule of the access strategy graphic, prompting the user with an input error.

8. The method according to any one of claims 1 to 7, wherein the converting (S130) the access strategy graphic into the access control strategy that can be identified by the system comprises:
acquiring (S131) the access rule by parsing the access strategy graphic;
determining (S132) a security enhanced Android system strategy and/or an intent isolation strategy according to the access rule; and
compiling (S133) the security enhanced Android system strategy and/or the intent isolation strategy into the access control strategy that can be identified by the system, wherein the access control strategy comprises the security enhanced Android system strategy and/or the intent isolation strategy.

9. A mobile terminal (800) configured to perform any of the methods according to claims 1 - 8.

## Patentansprüche

1. Anwendungszugriffssteuerungsverfahren, das von einem mobilen Endgerät durchgeführt wird, wobei das Verfahren umfasst:
• Erfassen (S110) einer grafischen Eingabe durch einen Benutzer;
• Erzeugen (S120) einer Zugriffsstrategiegrafik gemäß der Grafik, wobei die Zugriffsstrategiegrafik wenigstens einige der folgenden mehreren Zugriffsregeln zwischen mindestens zwei Anwendungen anzeigt:
∘ ob die mindestens zwei Anwendungen in der Art einer Interprozesskommunikation aufeinander zugreifen dürfen;
∘ ob die mindestens zwei Anwendungen in der Art einer Netzwerkkommunikation aufeinander zugreifen dürfen;
∘ ob die mindestens zwei Anwendungen in der Art einer Dateisystemkommunikation aufeinander zugreifen dürfen; oder
∘ ob die mindestens zwei Anwendungen in der Art einer Absichtskommunikation aufeinander zugreifen dürfen;
• Umwandeln (S130) der Zugriffsstrategiegrafik in eine Zugriffssteuerungsstrategie, die durch ein System identifiziert werden kann, wobei die Zugriffssteuerungsstrategie verwendet wird, um die Zugriffsregeln für die mindestens zwei Anwendungen anzuzeigen, die aufeinander zugreifen; und
• Steuern (S140) des Zugriffs zwischen den mindestens zwei Anwendungen gemäß der Zugriffssteuerungsstrategie.

2. Verfahren nach Anspruch 1, wobei das Erfassen (S110) der Grafikeingabe durch den Benutzer umfasst:
Darstellen (S111) einer ersten Schnittstelle für den Benutzer, wobei die erste Schnittstelle einen Strategiebearbeitungsbereich und einen ersten Grafikbereich umfasst, wobei der Strategiebearbeitungsbereich vom Benutzer zum Bearbeiten der Zugriffsstrategiegrafik verwendet wird, und der erste Grafikbereich zum Darstellen der verschiedenen Grafiken für den Benutzer verwendet wird, die zum Anzeigen der Zugriffsstrategiegrafik verwendet werden; und
Erfassen (S112) einer ersten Grafikeingabe durch den Benutzer durch Erkennen der ersten Grafik, die vom Benutzer aus dem ersten Grafikbereich in den Strategiebearbeitungsbereich gezogen wird.

3. Verfahren nach Anspruch 2, wobei die erste Grafik eine Anwendungsgrafik, eine Zwischenanwendungs-Kommunikationsverbindungsgrafik und eine Zwischenanwendungs-Zugriffsregelgrafik umfasst, wobei die Anwendungsgrafik zum Anzeigen einer Anwendung verwendet wird, die Zwischenanwendungs-Kommunikationsverbindungsgrafik zum Anzeigen verwendet wird, dass eine Kommunikationsverbindung zwischen Anwendungen besteht, und die Zwischenanwendungs-Zugriffsregelgrafik zum Anzeigen verwendet wird, ob Anwendungen aufeinander zugreifen dürfen.

4. Verfahren nach Anspruch 2 oder 3, wobei die erste Grafik eine Domänengrafik, eine Zwischendomänen-Kommunikationsverbindungsgrafik und eine Zwischendomänen-Zugriffsregelgrafik umfasst; oder die erste Grafik eine Anwendungsgrafik, eine Domänengrafik, eine Zwischendomänen-Kommunikationsverbindungsgrafik und eine Zwischendomänen-Zugriffsregelgrafik umfasst, wobei die Anwendungsgrafik zum Anzeigen einer Anwendung verwendet wird, die Domänengrafik zum Anzeigen einer Anwendungsdomäne verwendet wird, die durch eine oder mehrere Anwendungen gebildet wird, deren Attribute gleich sind, die Zwischendomänen-Kommunikationsverbindungsgrafik zum Anzeigen verwendet wird, dass eine Kommunikationsverbindung zwischen Anwendungsdomänen besteht, und die Zwischendomänen-Zugriffsregelgrafik zum Anzeigen verwendet wird, ob Anwendungsdomänen aufeinander zugreifen dürfen.

5. Verfahren nach Anspruch 4, wobei das Erfassen (S110) der Grafikeingabe durch den Benutzer ferner umfasst:
Darstellen (S113) einer zweiten Schnittstelle für den Benutzer, wobei die zweite Schnittstelle einen Zugehörigkeitsbeziehungsbearbeitungsbereich und einen zweiten Grafikbereich umfasst, wobei der Zugehörigkeitsbeziehungsbearbeitungsbereich vom Benutzer zum Bearbeiten einer Zugehörigkeitsbeziehung zwischen einer Anwendung und einer Domäne verwendet wird, und der zweite Grafikbereich zum Darstellen verschiedener Grafiken für den Benutzer verwendet wird, die zum Anzeigen der Zugehörigkeitsbeziehung verwendet werden; und
Erfassen (S114) einer zweiten Grafikeingabe durch den Benutzer durch Erkennen der zweiten Grafik, die vom Benutzer aus dem zweiten Grafikbereich in den Zugehörigkeitsbeziehungsbearbeitungsbereich gezogen wird.

6. Verfahren nach Anspruch 5, wobei die zweite Grafik eine Anwendungsgrafik, die Domänengrafik und eine Zugehörigkeitsverbindungsgrafik umfasst, wobei die Anwendungsgrafik zum Anzeigen einer Anwendung verwendet wird, und die Zugehörigkeitsverbindungsgrafik zum Anzeigen verwendet wird, dass eine Zugehörigkeitsbeziehung zwischen einer Anwendung und einer Anwendungsdomäne besteht.

7. Verfahren nach einem der Ansprüche 2 bis 6, wobei das Verfahren ferner umfasst:
Auffordern des Benutzers mit einem Eingabefehler, wenn die Grafikeingabe durch den Benutzer nicht einer Erzeugungsregel der Zugriffsstrategiegrafik entspricht.

8. Verfahren nach einem der Ansprüche 1 bis 7, wobei das Umwandeln (S130) der Zugriffsstrategiegrafik in die Zugriffssteuerungsstrategie, die durch das System identifiziert werden kann, umfasst:
Erfassen (S131) der Zugriffsregel durch Parsen der Zugriffsstrategiegrafik;
Bestimmen (S132) einer sicherheitsverbesserten Android-Systemstrategie und/oder einer Absichtsisolationsstrategie gemäß der Zugriffsregel; und
Kompilieren (S133) der sicherheitsverbesserten Android-Systemstrategie und/oder der Absichtsisolationsstrategie zu der Zugriffssteuerungsstrategie, die durch das System identifiziert werden kann, wobei die Zugriffssteuerungsstrategie die sicherheitsverbesserte Android-Systemstrategie und/oder die Absichtsisolationsstrategie umfasst.

9. Mobiles Endgerät (800), konfiguriert zum Durchführen eines der Verfahren nach Anspruch 1 bis 8.

## Revendications

1. Procédé de commande d'accès à une application réalisé par un terminal mobile, le procédé comprenant :
• l'acquisition (S110) d'une entrée graphique par un utilisateur ;
• la génération (S120) d'un graphique de stratégie d'accès en fonction du graphique, le graphique de stratégie d'accès indiquant au moins certaines des multiples règles d'accès suivantes entre au moins deux applications :
∘ si les au moins deux applications sont autorisées à accéder l'une à l'autre dans un mode de communication entre processus ;
∘ si les au moins deux applications sont autorisées à accéder l'une à l'autre dans un mode de communication de réseau ;
∘ si les au moins deux applications sont autorisées à accéder l'une à l'autre dans un mode de communication de système de fichiers ; ou
∘ si les au moins deux applications sont autorisées à accéder l'une à l'autre dans un mode de communication d'intention ;
• la conversion (S130) du graphique de stratégie d'accès en une stratégie de commande d'accès qui peut être identifiée par un système, la stratégie de commande d'accès étant utilisée pour indiquer les règles d'accès pour les au moins deux applications accédant l'une à l'autre ; et
• la commande (S140) d'accès entre les au moins deux applications en fonction de la stratégie de commande d'accès.

2. Procédé selon la revendication 1, l'acquisition (S110) de l'entrée graphique par l'utilisateur comprenant :
la présentation (S111) d'une première interface à l'utilisateur, la première interface comprenant une zone d'édition de stratégie et une première zone graphique, la zone d'édition de stratégie étant utilisée par l'utilisateur pour éditer le graphique de stratégie d'accès, et la première zone graphique étant utilisée pour présenter à l'utilisateur divers graphiques utilisés pour indiquer le graphique de stratégie d'accès ; et
l'acquisition (S112), par détection d'un premier graphique glissé par l'utilisateur de la première zone graphique vers la zone d'édition de stratégie, de la première entrée graphique par l'utilisateur.

3. Procédé selon la revendication 2, le premier graphique comprenant un graphique d'application, un graphique de connexion de communications entre applications, et un graphique de règle d'accès entre applications, le graphique d'application étant utilisé pour indiquer une application, le graphique de connexion de communications entre applications étant utilisé pour indiquer qu'il existe une connexion de communications entre des applications, et le graphique de règle d'accès entre applications étant utilisé pour indiquer si des applications sont autorisées à accéder les unes aux autres.

4. Procédé selon la revendication 2 ou 3, le premier graphique comprenant un graphique de domaine, un graphique de connexion de communications entre domaines, et un graphique de règle d'accès entre domaines ; ou le premier graphique comprenant un graphique d'application, un graphique de domaine, un graphique de connexion de communications entre domaines, et un graphique de règle d'accès entre domaines, le graphique d'application étant utilisé pour indiquer une application, le graphique de domaine étant utilisé pour indiquer un domaine d'application formé par une ou plusieurs applications dont les attributs sont les mêmes, le graphique de connexion de communications entre domaines étant utilisé pour indiquer qu'il existe une connexion de communications entre des domaines d'application, et le graphique de règle d'accès entre domaines indiquant si des domaines d'application sont autorisés à accéder les uns aux autres.

5. Procédé selon la revendication 4, l'acquisition (S110) de l'entrée graphique par l'utilisateur comprenant en outre :
la présentation (S113) d'une seconde interface à l'utilisateur, la seconde interface comprenant une zone d'édition de relation d'appartenance et une seconde zone graphique, la zone d'édition de relation d'appartenance étant utilisée par l'utilisateur pour éditer une relation d'appartenance entre une application et un domaine, et la seconde zone graphique étant utilisée pour présenter à l'utilisateur divers graphiques utilisés pour indiquer la relation d'appartenance ; et l'acquisition (S114), par détection d'un second graphique glissé par l'utilisateur de la seconde zone graphique vers la zone d'édition de relation d'appartenance, de la seconde entrée graphique par l'utilisateur.

6. Procédé selon la revendication 5, le second graphique comprenant un graphique d'application, le graphique de domaine, et un graphique de connexion d'appartenance, le graphique d'application étant utilisé pour indiquer une application, et le graphique de connexion d'appartenance étant utilisé pour indiquer qu'il existe une relation d'appartenance entre une application et un domaine d'application.

7. Procédé selon l'une quelconque des revendications 2 à 6, le procédé comprenant en outre :
lorsque l'entrée graphique par l'utilisateur n'est pas conforme à une règle de génération du graphique de stratégie d'accès, l'invitation de l'utilisateur à signaler une erreur d'entrée.

8. Procédé selon l'une quelconque des revendications 1 à 7, la conversion (S130) du graphique de stratégie d'accès en la stratégie de commande d'accès qui peut être identifiée par le système comprenant :
l'acquisition (S131) de la règle d'accès par analyse du graphique de stratégie d'accès ;
la détermination (S132) d'une stratégie de système Android à sécurité renforcée et/ou d'une stratégie d'isolation d'intention en fonction de la règle d'accès ; et
la compilation (S133) de la stratégie de système Android à sécurité renforcée et/ou de la stratégie d'isolation d'intention dans la stratégie de commande d'accès qui peut être identifiée par le système, la stratégie de commande d'accès comprenant la stratégie de système Android à sécurité renforcée et/ou la stratégie d'isolation d'intention.

9. Terminal mobile (800) configuré pour réaliser l'un quelconque des procédés selon les revendications 1 à 8.
